# EUROPEAN PATENT SPECIFICATION

(11) **EP 2 894 691 B1**
(45) Date of publication and mention of the grant of the patent: **21.03.2018**
(21) Application number: 14189427.9
(22) Date of filing: 17.10.2014
(51) Int. Cl.: H01M 2/02, H01M 2/04, H01M 2/26, H01M 10/04

(54) **Secondary battery**
Sekundärbatterie
Batterie secondaire

(30) Priority: 08.01.2014 KR 20140002459
(43) Date of publication of application: 15.07.2015
(73) Proprietor: Samsung SDI Co., Ltd., Yongin-si, Gyeonggi-do 17084 (KR)
(72) Inventor: Choi, Jinkyu, Gyeonggi-do (KR)
(74) Representative: Taor, Simon Edward William

(56) References cited:
- KR-A- 20110 047 120
- US-A1- 2003 017 390
- US-A1- 2006 127 751
- US-A1- 2012 121 968

## Description

Unlike a primary battery that is incapable of being recharged, a secondary battery is a battery that can be repeatedly charged and discharged. A low-capacity secondary battery having a single cell is commonly used in small portable electronic apparatuses, such as mobile phones, laptop computers, and camcorders. A large-capacity secondary battery that includes a plurality of secondary cells connected in a pack shape may be used as a power source for driving a motor, such as a motor of a hybrid electric vehicle and the like.

Recently, in order to satisfy consumers' preference, electronic devices tend to be gradually becoming smaller and thinner. Therefore, in order to minimize squandering of an unnecessary space of the electronic device, secondary batteries need to be smaller and thinner. In addition, according to consumers' request, electronic devices are turning away from a flat-type plain design and are being developed to have a wide variety of designs. In particular, an electronic device, such as a mobile phone, a notebook computer, or the like, is ergonomically designed to have a predetermined curved surface.

US2006127751 (A1) discloses a lithium rechargeable battery with an electrode assembly comprising at least two positive electrode plates with electrode tabs coupled to each positive electrode plate, at least two negative electrode plates with electrode tabs coupled to each negative electrode plate, separators interposed between each positive and negative electrode pair and the electrode assembly being formed by winding a layered structure of the electrode plates and separators into a jelly roll shape. The document does not disclose that the sectional surface of the electrode tab is obliquely formed so as to correspond to a shape of a portion of one of the long sides of the terminal plate.

US2012121968 (A1) discloses a lithium-ion secondary battery which includes a jelly roll, a positive electrode tab, a negative electrode tab, a positive electrode can, and a lid. The jelly roll is made by rolling the positive electrode and the negative electrode with an interposed separator, and is contained in the casing.

Accordingly, it is desired that space squandering be minimized or reduced by designing the secondary battery incorporated into the electronic device so as to have a curved surface conforming to the predetermined curved surface of the electronic device.

According to an aspect of embodiments of the present invention, a secondary battery has improved safety and increased process margin by improving a coupling force between an electrode tab and a terminal plate. The secondary battery according to the present invention is defined in claim 1. Preferred features are set out in claims 2 to 14. The first long side may be positioned to be nearer to a center of the electrode assembly, and the second long side may be positioned to be nearer to an outer edge of the electrode assembly.

The sectional surface may be obliquely formed such that a length of the electrode tab increases from the first long side to the second long side.

The terminal plate may include a first surface facing the cap plate and a second surface opposite to the first surface and facing the electrode assembly, and the electrode tab may be welded to the second surface.

The terminal plate includes a pair of long sides and a pair of short sides connecting the pair of long sides and shorter than the pair of long sides.

The long sides may be curved.

The sectional surface may be parallel to the long sides.

The pair of long sides may include two straight lines.

The pair of long sides may include a first straight line perpendicular to the lengthwise direction of the electrode tab, and a second straight line connected to the first straight line and extending obliquely from the first straight line.

The sectional surface may be parallel to the second straight line.

The terminal plate may include a folded plate formed by folding a rectangular plate.

The rectangular plate may include a pair of long sides and a pair of short sides connecting the pair of long sides, and the terminal plate may be formed by folding the rectangular plate along an oblique line connecting the pair of long sides.

The rectangular plate may include a first surface facing the cap plate and a second surface opposite to the first surface and facing the electrode assembly, and the terminal plate may be bent such that a portion of the first surface is superposed on the second surface.

The electrode tab may be welded to the superposed portion of the first surface.

The case may include a bottom surface, a front surface and a rear surface upwardly extending from the bottom surface and having a relatively large area, and a pair of short side surfaces upwardly extending from the bottom surface, having a relatively small area and connecting the front surface to the rear surface, and the case may be configured such that the pair of short side surfaces are bent toward the front surface in view of a central axis positioned at a center of the case.

An angle of the sectional surface of the electrode tab may be proportional to a degree to which the case is bent.

According to an embodiment of the present invention, a secondary battery according to claim 1 further includes a second electrode tab electrically connected to the electrode assembly and protruding at an end of the electrode assembly.

The second electrode tab may be symmetrical with the first electrode tab along a lengthwise direction of the case in view of a central axis at a center of the case. The cap plate may include a first surface and a second surface opposite to the first surface and facing the electrode assembly, and the second electrode tab may be welded to the second surface.

The second electrode tab may include a first long side and a second long side parallel to a lengthwise direction of the second electrode tab, and a sectional surface connecting the first long side to the second long side, and an angle between the first long side and the sectional surface may be greater than 90 degrees.

As described above, in a secondary battery according to an aspect of the present invention, the sectional surface of the electrode tab is obliquely formed to be shaped to correspond to a shape of the long side of the terminal plate, thereby improving a coupling force between the electrode tab and the terminal plate and improving a process margin.

Additional principles, aspects, and/or advantages of embodiments of the invention are set forth, in part, in the description which follows and, in part, will be obvious from the description, or may be learned by practice of the invention.

Principles and aspects of the present invention will be more apparent from the following detailed description in conjunction with the accompanying drawings, in which:
FIG. 1 is a perspective view of a secondary battery according to an embodiment of the present invention;
FIG. 2 is an exploded perspective view of the secondary battery of FIG. 1;
FIG. 3 is a partial front view illustrating a state in which an electrode tab is assembled with a terminal plate of the secondary battery of FIG. 1;
FIG. 4 is a bottom perspective view illustrating a state in which an electrode assembly coupled to the electrode tab of FIG. 3 is accommodated in a case of the secondary battery of FIG. 1;
FIG. 5 is a partial front view illustrating a state in which an electrode tab is assembled with a terminal plate of a secondary battery, according to another embodiment of the present invention;
FIG. 6 is a partial front view illustrating a state in which an electrode tab is assembled with a terminal plate of a secondary battery, according to another embodiment of the present invention; and
FIG. 7 illustrates a method for forming the terminal plate shown in FIG. 6.

In the following detailed description, certain exemplary embodiments of the present invention are shown and described, simply by way of illustration. As those skilled in the art would realize, the described embodiments may be modified in various different ways without departing from the scope of the invention as defined by the claims. Accordingly, the drawings and description are to be regarded as illustrative in nature and not restrictive.

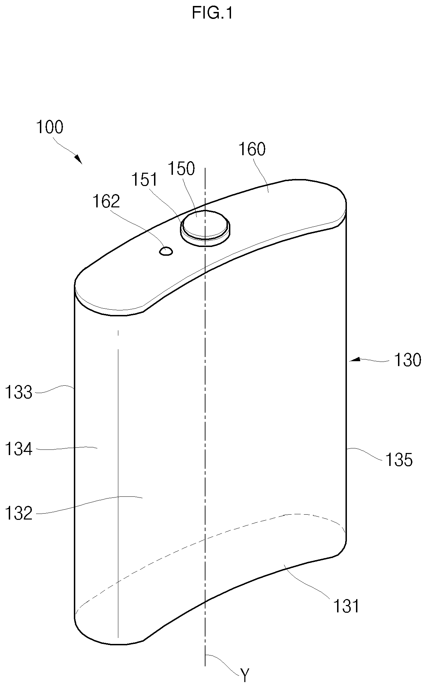

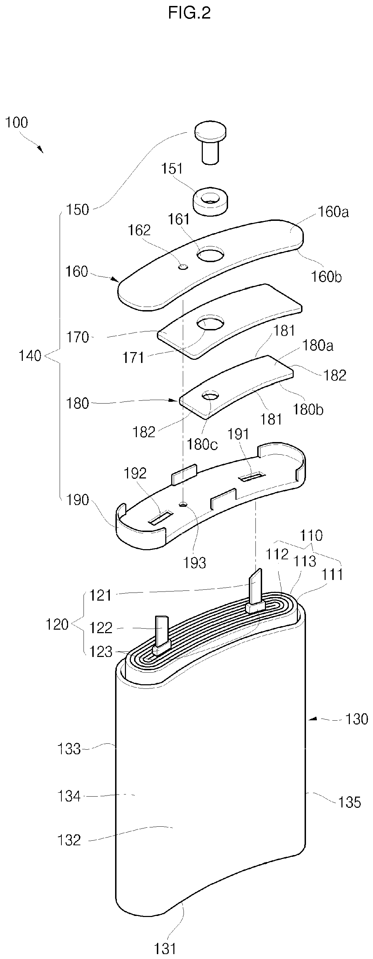

FIG. 1 is a perspective view of a secondary battery according to an embodiment of the present invention, and FIG. 2 is an exploded perspective view of the secondary battery shown in FIG. 1.
Referring to FIGS. 1 and 2, a secondary battery 100 according to an embodiment of the present invention includes an electrode assembly 110, an electrode tab 120, a case 130, and a cap assembly 140.

In the secondary battery 100 according to an embodiment of the present invention, both sides of the case 130 are curved relative to a central axis Y extending along a lengthwise direction, and the cap assembly 140 coupled to a top portion of the case 130 is also curved corresponding to the case 130. In some embodiments, the electrode assembly 110 may be in a curved state in a same manner as the case 130, and then accommodated within the case 130. In another embodiment, the electrode assembly 110 being in a planar state may be curved while being accommodated within the case 130.
The electrode assembly 110, in some embodiments, includes a first electrode plate 111 having a first active material coated on a surface of a first current collector, a second electrode plate 112 having a second active material coated on a surface of a second current collector, and a separator 113 interposed between the first electrode plate 111 and the second electrode plate 112 and electrically insulating the first electrode plate 111 and the second electrode plate 112 from each other. The electrode assembly 110 may include the first electrode plate 111, the second electrode plate 112, and the separator 113 wound in a jelly roll configuration. In some embodiments, the first electrode plate 111 may include a copper (Cu) foil, the second electrode plate 112 may include an aluminum (Al) foil, and the separator 113 may include polyethylene (PE) or polypropylene (PP), but embodiments of the present invention are not limited thereto.

The electrode tab 120 is electrically connected to the electrode assembly 110. The electrode tab 120 includes a first electrode tab 121 electrically connected to the first electrode plate 111, and a second electrode tab 122 electrically connected to the second electrode plate 112.

The first electrode tab 121 is electrically connected (e.g., welded) to the first electrode plate 111 and protrudes at a top end of the electrode assembly 110. Thus, the first electrode tab 121 and the first electrode plate 111 have a same polarity. In some embodiments, an insulation member 123 is attached to the first electrode tab 121 to prevent or substantially prevent the first electrode tab 121 from being shorted to the second electrode plate 112.

The second electrode tab 122 is electrically connected (e.g., welded) to the second electrode plate 112 and protrudes at the top end of the electrode assembly 110. Thus, the second electrode tab 122 and the second electrode plate 112 have a same polarity. In some embodiments, an insulation member 123 is attached to the second electrode tab 122 to prevent or substantially prevent the second electrode tab 122 from being shorted to the first electrode plate 111.

In some embodiments, the electrode tab 120 is configured such that ends of the first electrode tab 121 and the second electrode tab 122 protruding at the top end of the electrode assembly 110 are obliquely formed. The configuration of the electrode tab 120 is described in further detail later herein.

The case 130, which may be a can, has a top portion open to receive the electrode assembly 110. The case 130, in some embodiments, includes a bottom surface 131, a pair of long side surfaces 132 and 133 upwardly extending from the bottom surface 131 and having a relatively large area, and a pair of short side surfaces 134 and 135 upwardly extending from the bottom surface 131, having a relatively small area and connecting the pair of long side surfaces 132 and 133 to each other. In addition, the case 130 has the central axis Y extending at the center of the case 130 in the lengthwise direction. Here, the pair of long side surfaces 132 and 133 may be defined as a front surface 132 and a rear surface 133. The case 130 may be configured such that the pair of short side surfaces 134 and 135 are curved toward the front surface 132 of the case 130 in view of the central axis Y. The front surface 132 and the rear surface 133 may be recessed to be convex toward a direction extending from the front surface toward the rear surface 133. The case 130 may be configured such that the pair of short side surfaces 134 and 135 are curved toward the rear surface 133 of the case 130 in view of the central axis Y. In some embodiments, the case 130 may be formed by deep drawing and may be made of a conductive material that is light in weight and ductile, such as aluminum or an aluminum alloy. In some embodiments, the inner surface of the case 130 is treated with insulation and is insulated from the electrode assembly 110. In some embodiments, the case 130 may have a polarity, such as a function as a positive electrode.

The cap assembly 140 is coupled to the top end of the case 130. The cap assembly 140, in some embodiments, includes an electrode terminal 150, a cap plate 160, an insulation plate 170, a terminal plate 180, and an insulation case 190.

The electrode terminal 150, in some embodiments, is coupled to the center of the cap plate 160, passes through the cap plate 160, and is electrically connected to the terminal plate 180. A gasket 151 may be formed between the electrode terminal 150 and the cap plate 160 and may insulate the electrode terminal 150 and the cap plate 160 from each other.

The cap plate 160 seals the top end of the case 130 and is shaped as a planar or substantially planar plate. In addition, the cap plate 160 may be shaped to correspond to a horizontal section of the case 130. That is, the cap plate 160 may be configured such that a pair of long sides coupled to the pair of long side surfaces 132 and 133 of the case 130 are curved. In some embodiments, a terminal hole 161 is formed at a center of the cap plate 160 to allow the electrode terminal 150 to pass through and to be coupled to the terminal hole 161. In some embodiments, an electrolyte injection hole 162 for injecting an electrolyte solution into the case 130 is formed in the cap plate 160. After the electrolyte solution is injected, a plug (not shown) may be installed in the electrolyte injection hole 162 to hermetically seal the electrolyte injection hole 162. The cap plate 160 includes a first surface 160a that is planar or substantially planar and a second surface 160b that is opposite to the first surface 160a and faces the electrode assembly 110. In some embodiments, the second electrode tab 122 is coupled to the second surface 160b such that the cap plate 160 is electrically connected to the second electrode tab 122, which is described in further detail later herein.

The insulation plate 170 and the terminal plate 180 are sequentially arranged under the cap plate 160. In some embodiments, the insulation plate 170 and the terminal plate 180 are shaped such that long sides thereof are curved in a same manner as the cap plate 160.

A hole 171 through which the electrode terminal 150 passes is formed in the insulation plate 170, and the insulation plate 170 may be separated from the electrode terminal 150 by the gasket 151. The insulation plate 170 insulates the cap plate 160 and the terminal plate 180 from each other.

The terminal plate 180 includes a first surface 180a that is planar or substantially planar and faces the cap plate 160 and a second surface 180b that is opposite to the first surface 180a and faces the electrode assembly 110, and the first electrode tab 121, in some embodiments, is coupled to the second surface 180b. The terminal plate 180 includes a pair of long sides 181 and a pair of short sides 182 connecting the pair of long sides 181 and having shorter lengths than the long sides 181. The terminal plate 180 is electrically connected to the first electrode tab 121, which is described in further detail later herein. In some embodiments, a hole 180c through which the electrode terminal 150 passes to be coupled thereto is formed in the terminal plate 180. The terminal plate 180 is electrically connected to the electrode terminal 150.

The insulation case 190 may be made of a polymer resin having an insulating property, such as polypropylene, for example. The insulation case 190 is arranged between the cap plate 160 and the electrode assembly 110. Holes 191 and 192 are formed in the insulation case 190 to allow the first electrode tab 121 and the second electrode tab 122 to pass therethrough, respectively. In addition, an electrolyte passing hole 193 located to correspond to the electrolyte injection hole 162 is formed in the insulation case 190.

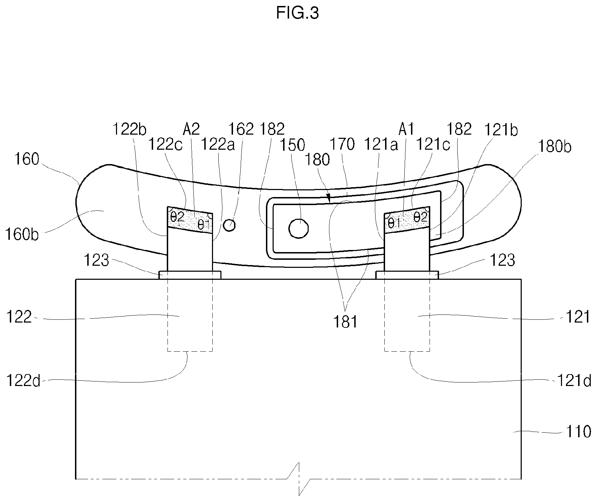

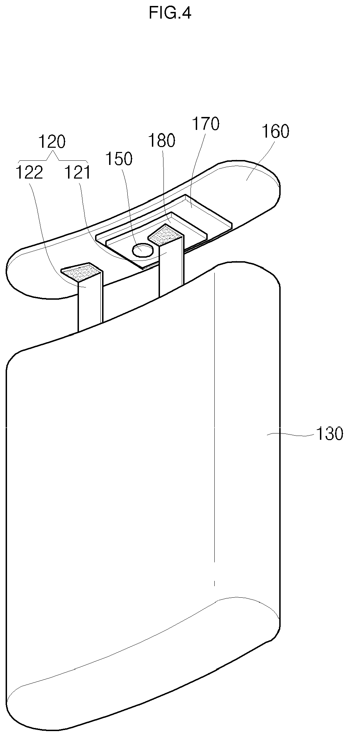

FIG. 3 is a partial front view illustrating a state in which the electrode tab 120 is assembled with the terminal plate 180 of the secondary battery 100, and FIG. 4 is a bottom perspective view illustrating a state in which the electrode assembly 100 coupled to the electrode tab 120 is accommodated in the case 130 of the secondary battery 100.

The configuration of the electrode tab 120 and a connection relationship between the electrode tab 120 and the cap assembly 140 according to an embodiment of the present invention is described below with reference to FIGS. 3 and 4.

Referring to FIG. 3, in this embodiment, the first electrode tab 121 includes a first long side 121a and a second long side 121b parallel to each other in a direction in which the first electrode tab 121 protrudes from the electrode assembly 110, that is, in a lengthwise direction of the first electrode tab 121, and a first short side 121c and a second short side 121d connecting the first long side 121a and the second long side 121b to each other. Here, the first short side 121c is protruded at the top end of the electrode assembly 110, and the second short side 121d is positioned within the electrode assembly 110. The first electrode tab 121 may be formed by cutting a long electrode tab, and the first short side 121c will be described as a sectional surface 121c hereinafter. The first long side 121a is positioned to be closer to a winding core of the electrode assembly 110, and the second long side 121b is positioned to be closer to an edge of the electrode assembly 110. An angle θ1 formed between the first long side 121a and the sectional surface 121c is greater than 90 degrees, and in some embodiments an angle θ2 formed between the second long side 121b and the sectional surface 121c is less than 90 degrees. That is, the sectional surface 121c is not perpendicular to the first long side 121a and the second long side 121b but is obliquely formed such that a height increases gradually from the first long side 121a to the second long side 121b. In some embodiments, a slope of the sectional surface 121c is proportional or corresponds to a bending extent of the case 130. That is, as the bending extent of the case 130 increases, the slope of the sectional surface 121c increases, and as the bending extent of the case 130 decreases, the slope of the sectional surface 121c decreases. Hence, the end of the first electrode tab 121 is slanted.

The first electrode tab 121 is electrically connected to the terminal plate 180. In some embodiments, the first electrode tab 121 is electrically connected to the second surface 180b of the terminal plate 180 by welding. In some embodiments, since the pair of short side surfaces 134 and 135 are bent toward the front surface 132 in view of the central axis Y of the case 130, the cap plate 160 coupled to the top portion of the case 130 is formed to correspond to a horizontal section of the case 130. In addition, the terminal plate 180 is shaped to be similar to the cap plate 160 and is coupled to a bottom portion of the cap plate 160. That is, the long sides 181 of the terminal plate 180 are gently curved. Here, the long sides 181 refer to relatively long sides of the terminal plate 180. The first electrode tab 121 coupled to the terminal plate 180 has the sectional surface 121c obliquely formed. The sectional surface 121c may be linear or may be curved along a direction of the long side 181 of the terminal plate 180. However, in some embodiments, a horizontal length of the sectional surface 121c is much shorter than that of the terminal plate 180, and the sectional surface 121c is shaped as a substantially straight line. Therefore, the sectional surface 121c of the first electrode tab 121 is formed to be substantially parallel to a portion of the long side 181 of the terminal plate 180. Accordingly, since a welding area A1 in which the first electrode tab 121 is welded to the terminal plate 180 is increased, a coupling force between the first electrode tab 121 and the terminal plate 180 is improved. In addition, since the welding area A1 is spaced apart by a distance (e.g., a predetermined distance) from the cap plate 160, it is possible to prevent or substantially prevent the first electrode tab 121 from being shorted with the case 130 coupled to the cap plate 160. That is, in the secondary battery 100 according to the present invention, the sectional surface 121c of the first electrode tab 121 is obliquely formed so as to have a shape corresponding to the long side 181 of the terminal plate 180, thereby improving the coupling force and safety and improving a process margin.

In this embodiment, the second electrode tab 122 includes a first long side 122a and a second long side 122b parallel to each other in a direction in which the second electrode tab 122 protrudes from the electrode assembly 110, that is, in a lengthwise direction of the second electrode tab 122, and a first short side 122c and a second short side 122d connecting the first long side 122a and the second long side 122b to each other. Here, the first short side 122c is protruded at the top end of the electrode assembly 110, and the second short side 122d is positioned within the electrode assembly 110. In some embodiments, since the second electrode tab 122 is formed by cutting a long electrode tab, like the first electrode tab 121, the first short side 122c will be described as a sectional surface 122c hereinafter. The first long side 122a is positioned to be closer to the winding core of the electrode assembly 110, and the second long side 122b is positioned to be closer to an edge of the electrode assembly 110. An angle θ1 formed between the first long side 122a and the sectional surface 122c is greater than 90 degrees, and in some embodiments an angle θ2 formed between the second long side 122b and the sectional surface 122c is less than 90 degrees. That is, the sectional surface 122c is obliquely formed such that its height increases gradually from the first long side 122a to the second long side 122b. In some embodiments, the second electrode tab 122 is formed to be symmetrical with the first electrode tab 121 in view of the central axis Y of the case 130. Hence, the end of the second electrode tab 122 is slanted.

The second electrode tab 122 is electrically connected to the cap plate 160. In some embodiments, the second electrode tab 122 is electrically connected to the second surface 160b of the cap plate 160. The cap plate 160 is formed to correspond to a horizontal section of the case 130. That is, long sides of the cap plate 160 are gently curved. Here, the long sides refer to sides of the cap plate 160 which are coupled to the pair of long side surfaces 132 and 133 of the case 130. In some embodiments, the second electrode tab 122 coupled to the cap plate 160 has the sectional surface 122c obliquely formed. Accordingly, since a welding area A2 in which the second electrode tab 122 is welded to the cap plate 160 is spaced apart by a distance (e.g., a predetermined distance) from the long sides of the cap plate 160, a process margin may be improved.

As described above, after the first electrode tab 121 is welded to the terminal plate 180 and the second electrode tab 122 is welded to the cap plate 160, as shown in FIGS. 3 and 4, the electrode assembly 110 is accommodated in the case 130 and the first electrode tab 121 and the second electrode tab 122 are bent, as shown in FIG. 4, and the cap plate 160 is coupled to the case 130.

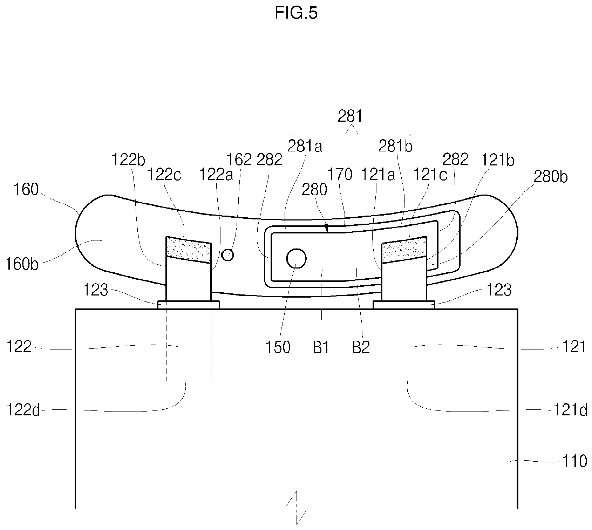

FIG. 5 is a partial front view illustrating a state in which an electrode tab is assembled with a terminal plate of a secondary battery, according to another embodiment of the present invention.

Referring to FIG. 5, a terminal plate 280 according to another embodiment of the present invention includes a first region (Bi) to which the electrode terminal 150 is coupled, and a second region (B2) to which the first electrode tab 121 is coupled at a surface 280b facing the electrode assembly 110. The first region B1 is substantially shaped as a rectangle, and the second region B2 extends from an end of the first region B1 and is substantially shaped as a parallelogram. Therefore, a long side 281 of the terminal plate 280 includes two straight lines connected to each other. The long side 281 includes a first straight line portion 281a extending from a first short side 282 of the terminal plate 280 in a direction perpendicular to a lengthwise direction of the first electrode tab 121, and a second straight line portion 281b extending obliquely from the first straight line portion 281a to a second short side 282 of the terminal plate 280. In some embodiments, the second straight line portion 281b is parallel to the sectional surface 121c of the first electrode tab 121. Therefore, according to such embodiment of the present inventions, the sectional surface 121c of the first electrode tab 121 is obliquely formed to be parallel to the second straight line portion 281b of the terminal plate 280, thereby improving the coupling force and safety, and improving the process margin.

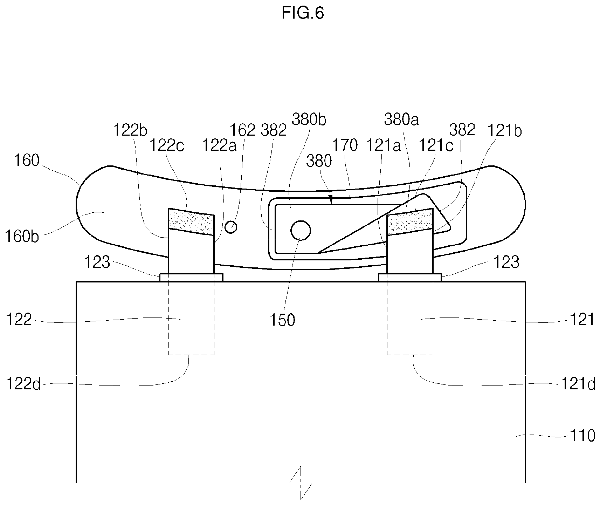

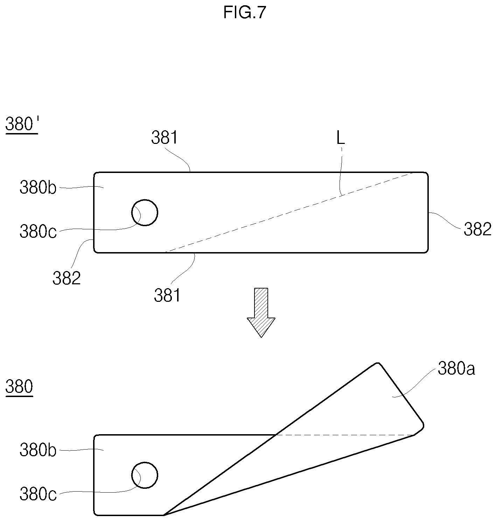

FIG. 6 is a partial front view illustrating a state in which an electrode tab is assembled with a terminal plate of a secondary battery, according to another embodiment of the present invention, and FIG. 7 illustrates a method for forming the terminal plate shown in FIG. 6.

Referring to FIGS. 6 and 7, a terminal plate 380 according to another embodiment of the present invention is formed by folding a substantially rectangular plate. In some embodiments, a plate 380' that is the terminal plate 380 not yet folded includes a first surface 380a that is planar and a second surface 380b that is planar and opposite to the first surface 380a. Here, the first surface of the plate 380' that is not yet folded faces the cap plate 160, and the second surface 380b faces the electrode assembly 110. The plate 380' further includes a pair of long sides 381 and a pair of short sides 382 connecting the pair of long sides 381 to each other. Next, if the plate 380' is folded along an oblique line L connecting the pair of long sides 381 of the plate 380', the first surface 380a overlaps with a portion of the second surface 380b to then be exposed in a direction facing away from the cap plate 160. The first electrode tab 121 is coupled to the exposed portion of the first surface 380a. As described above, the terminal plate 380 having a shape similar to the cap plate 160 may be formed by folding the rectangular plate 380'. In some embodiments, a hole 380c through which the electrode terminal 150 passes to be coupled thereto is formed in the terminal plate 380.

As discussed, the invention provides a secondary battery as defined by claim 1. Hence, the end of the electrode tab is slanted.

In some embodiments, the first and second long sides are substantially parallel to a lengthwise direction of the electrode tab.

In some embodiments, the first long side is positioned to be nearer to a center of the electrode assembly, and the second long side is positioned to be nearer to an outer edge of the electrode assembly. The sectional surface is obliquely formed such that a length of the electrode tab increases from the first long side to the second long side.

In some embodiments, the terminal plate includes a first surface facing the cap plate and a second surface opposite to the first surface and facing the electrode assembly, and the electrode tab is welded to the second surface. The terminal plate includes a pair of long sides and a pair of short sides connecting the pair of long sides and shorter than the pair of long sides.

In some embodiments, the long sides of the terminal plate are curved, and the sectional surface may be substantially parallel to a portion of the curved long sides of the terminal plate. Hence, the sectional surface may be approximately parallel to a portion of the curved long sides of the terminal plate, In other such embodiments, the shape of the sectional surface may be curved to correspond to the curve of a curved long side of the terminal plate.

In some embodiments, the pair of long sides of the terminal plate each comprise two straight line portions. In other words, the each of the long sides has a first straight line portion and a second straight line portion. In some such embodiments, the pair of long sides of the terminal plate each include a first straight line portion perpendicular to the lengthwise direction of the electrode tab, and a second straight line portion connected to the first straight line portion and extending obliquely from the first straight line portion. In some such embodiments, the sectional surface is parallel to the second straight line portion.

In some embodiments, the terminal plate comprises a folded plate formed by folding a rectangular plate. In some such embodiments, the rectangular plate includes a pair of long sides and a pair of short sides connecting the pair of long sides, and the terminal plate is formed by folding the rectangular plate along an oblique line connecting the pair of long sides. The rectangular plate may include a first surface facing the cap plate and a second surface opposite to the first surface and facing the electrode assembly, and the terminal plate is folded such that a portion of the first surface is superposed on the second surface. In some such embodiments, the electrode tab is welded to the superposed portion of the first surface.

In some embodiments, the case comprises a bottom surface, a front surface and a rear surface upwardly extending from the bottom surface, and a pair of short side surfaces upwardly extending from the bottom surface and connecting the front surface and the rear surface, areas of the short side surfaces being smaller than areas of the front and rear surfaces, and wherein the case is configured such that the pair of short side surfaces are bent toward the front surface in view of a central axis located at a center of the case. In some such embodiments, an angle of the sectional surface of the electrode tab is proportional to a degree to which the case is bent.

In some embodiments, the secondary battery further comprises a second electrode tab electrically connected to the electrode assembly and protruding at an end of the electrode assembly.

In some embodiments, the second electrode tab is symmetrical with the electrode tab along a lengthwise direction of the case in view of a central axis at a center of the case.

In some embodiments, the cap plate includes a first surface and a second surface opposite to the first surface and facing the electrode assembly, and the second electrode tab is welded to the second surface.

In some embodiments, the second electrode tab includes a first long side and a second long side, and a sectional surface connecting the first long side to the second long side, and an angle between the first long side and the sectional surface is greater than 90 degrees, optionally wherein the first long side and the second long side are substantially parallel to a lengthwise direction of the second electrode tab.

While the secondary battery has been described in connection with what are presently considered to be some practical exemplary embodiments, it is to be understood that the present invention is not limited to the disclosed embodiments, but its scope is defined by the claims.

## Claims

1. A secondary battery (100) comprising:
an electrode assembly (110);
an electrode tab (120) electrically connected to the electrode assembly and protruding at an end of the electrode assembly;
a case (130) accommodating the electrode assembly;
a cap plate (160) coupled to the case; and
a terminal plate (180, 280, 380) between the cap plate and the electrode assembly and electrically connected to the electrode tab,
wherein the electrode tab includes first (121a, 122a) and second (121b, 122b) long sides and a sectional surface (121c, 122c) connecting the first and second long sides,
wherein an angle (θ1) between the first long side and the sectional surface is greater than 90 degrees,
wherein the terminal plate includes a pair of long sides (181, 281) and a pair of short sides (182, 282) connecting the pair of long sides and shorter than the pair of long sides, and
wherein the sectional surface of the electrode tab is obliquely formed so as to correspond to a shape of a portion of one of the long sides of the terminal plate.

2. The secondary battery (100) of claim 1, wherein the first (121a, 122a) and second (121b, 122b) long sides of the electrode tab are substantially parallel to a lengthwise direction of the electrode tab.

3. The secondary battery (100) of claim 1 or 2, wherein the first long side (121a, 122a) of the electrode tab is positioned to be nearer to a center of the electrode assembly, and the second long side of the electrode tab is positioned to be nearer to an outer edge of the electrode assembly.

4. The secondary battery (100) of any one of claims 1 to 3, wherein the sectional surface (121c, 122c) is obliquely formed such that a length of the electrode tab (120) increases from the first long side (121a, 122a) to the second long side (121b, 122b).

5. The secondary battery (100) of any one of claims 1 to 4, wherein the terminal plate (180, 280, 380) includes a first surface (180a, 380a) facing the cap plate (160) and a second surface (180b, 380b) opposite to the first surface and facing the electrode assembly (110), and the electrode tab is welded to the second surface.

6. The secondary battery (100) of any of the preceding claims, wherein the long sides (181) of the terminal plate (180) are curved and wherein the sectional surface is substantially parallel to a portion of the curved long sides of the terminal plate.

7. The secondary battery (100) of any of the preceding claims, wherein the pair of long sides (281) of the terminal plate (280) each comprise two straight line portions (281a, 281b) and wherein the sectional surface (121c) is parallel to one of the straight line portions.

8. The secondary battery (100) of claim 7, wherein the pair of long sides (281) of the terminal plate (280) each includes a first straight line portion (281a) perpendicular to the lengthwise direction of the electrode tab (120), and a second straight line portion (281b) connected to the first straight line portion and extending obliquely from the first straight line portion; optionally wherein the sectional surface (121c) is parallel to the second straight line portion.

9. The secondary battery (100) of any one of claims 1 to 4, wherein the terminal plate (380) comprises a folded plate formed by folding a rectangular plate; optionally wherein the prefolded rectangular plate includes a pair of prefolded long sides (381) and a pair of prefolded short sides (382) connecting the pair of prefolded long sides, and the terminal plate is formed by folding the rectangular plate along an oblique line (L) connecting the pair of prefolded long sides, wherein the pair of long sides of the terminal plate each comprise two straight line portions of the folded plate, and wherein the sectional surface (121c) is parallel to one of the straight line portions of the folded plate.

10. The secondary battery (100) of claim 9, wherein the rectangular plate includes a first surface (380a) facing the cap plate (160) and a second surface (380b) opposite to the first surface and facing the electrode assembly (110), and the terminal plate is folded such that a portion of the first surface is superposed on the second surface;
optionally wherein the electrode tab (120) is welded to the superposed portion of the first surface.

11. The secondary battery (100) of any one of claims 1 to 10, wherein the case (130) comprises a bottom surface (131), a front surface (132) and a rear surface (133) upwardly extending from the bottom surface, and a pair of short side surfaces (134, 135) upwardly extending from the bottom surface and connecting the front surface and the rear surface, areas of the short side surfaces being smaller than areas of the front and rear surfaces, and wherein the case is configured such that the pair of short side surfaces are bent toward the front surface in view of a central axis (Y) located at a center of the case;
optionally wherein an angle of the sectional surface of the electrode tab is proportional to a degree to which the case is bent.

12. The secondary battery (100) of any one of claims 1 to 11, further comprising a second electrode tab (122) electrically connected to the electrode assembly (110) and protruding at an end of the electrode assembly;
optionally wherein the second electrode tab is symmetrical with the electrode tab along a lengthwise direction of the case in view of a central axis (Y) at a center of the case.

13. The secondary battery (100) of claim 12, wherein the cap plate (160) includes a first surface (160a) and a second surface (160b) opposite to the first surface and facing the electrode assembly (110), and the second electrode tab is welded to the second surface.

14. The secondary battery (100) of claim 12 or 13, wherein the second electrode tab (122) includes a first long side (122a) and a second long side (122b) and a sectional surface (122c) connecting the first long side to the second long side, and an angle (θ1) between the first long side and the sectional surface is greater than 90 degrees;
optionally wherein the first long side and the second long side are substantially parallel to a lengthwise direction of the second electrode tab.

## Patentansprüche

1. Sekundärbatterie (100), umfassend:
eine Elektrodenanordnung (110);
eine Elektrodenzunge (120), die elektrisch mit der Elektrodenanordnung verbunden ist und an einem Ende der Elektrodenanordnung vorsteht;
ein Gehäuse (130), das die Elektrodenanordnung aufnimmt;
eine Deckelplatte (160), die mit dem Gehäuse gekoppelt ist; und
eine Anschlussplatte (180, 280, 380) zwischen der Deckelplatte und der Elektrodenanordnung und elektrisch mit der Elektrodenzunge verbunden,
wobei die Elektrodenzunge eine erste (121a, 122a) und zweite (121b, 122b) lange Seite und eine die erste und zweite lange Seite verbindende Schnittfläche (121c, 122c) umfasst,
wobei ein Winkel (θ1) zwischen der ersten langen Seite und der Schnittfläche größer als 90 Grad ist,
wobei die Anschlussplatte ein Paar langer Seiten (181, 281) und ein Paar kurzer Seiten (182, 282), die das Paar langer Seiten verbinden und kürzer als das Paar langer Seiten sind, umfasst und
wobei die Schnittfläche der Elektrodenzunge schräg ausgebildet ist, so dass sie einer Form eines Abschnitts einer der langen Seiten der Anschlussplatte entspricht.

2. Sekundärbatterie (100) nach Anspruch 1, wobei die erste (121a, 122a) und zweite (121b, 122b) lange Seite der Elektrodenzunge im Wesentlichen parallel zu einer Längsrichtung der Elektrodenzunge sind.

3. Sekundärbatterie (100) nach Anspruch 1 oder 2, wobei die erste lange Seite (121a, 122a) der Elektrodenzunge so angeordnet ist, dass sie einer Mitte der Elektrodenanordnung näher ist, und die zweite lange Seite der Elektrodenzunge so angeordnet ist, dass sie einem äußeren Rand der Elektrodenanordnung näher ist.

4. Sekundärbatterie (100) nach einem der Ansprüche 1 bis 3, wobei die Schnittfläche (121c, 122c) schräg ausgebildet ist, derart dass eine Länge der Elektrodenzunge (120) von der ersten langen Seite (121a, 122a) zu der zweiten langen Seite (121b, 122b) zunimmt.

5. Sekundärbatterie (100) nach einem der Ansprüche 1 bis 4, wobei die Anschlussplatte (180, 280, 380) eine erste Oberfläche (180a, 380a), die der Deckelplatte (160) zugewandt ist, und eine zweite Oberfläche (180b, 380b), die der ersten Oberfläche gegenüberliegt und der Elektrodenanordnung (110) zugewandt ist, umfasst und die Elektrodenzunge an die zweite Oberfläche angeschweißt ist.

6. Sekundärbatterie (100) nach einem der vorangehenden Ansprüche, wobei die langen Seiten (181) der Anschlussplatte (180) gekrümmt sind und wobei die Schnittfläche im Wesentlichen parallel zu einem Abschnitt der gekrümmten langen Seiten der Anschlussplatte ist.

7. Sekundärbatterie (100) nach einem der vorangehenden Ansprüche, wobei das Paar langer Seiten (281) der Anschlussplatte (280) jeweils zwei geradlinige Abschnitte (281a, 281b) umfasst und wobei die Schnittfläche (121c) zu einem der geradlinigen Abschnitte parallel ist.

8. Sekundärbatterie (100) nach Anspruch 7, wobei das Paar langer Seiten (281) der Anschlussplatte (280) jeweils einen ersten geradlinigen Abschnitt (281a), der rechtwinklig zur Längsrichtung der Elektrodenzunge (120) ist, und einen zweiten geradlinigen Abschnitt (281b), der mit dem ersten geradlinigen Abschnitt verbunden ist und sich schräg von dem ersten geradlinigen Abschnitt aus erstreckt, umfasst;
wobei optional die Schnittfläche (121c) zu dem zweiten geradlinigen Abschnitt parallel ist.

9. Sekundärbatterie (100) nach einem der Ansprüche 1 bis 4, wobei die Anschlussplatte (380) eine gefaltete Platte umfasst, die durch Falten einer rechteckigen Platte ausgebildet wird; wobei optional die vorgefaltete rechteckige Platte ein Paar vorgefalteter langer Seiten (381) und ein Paar vorgefalteter kurzer Seiten (382), die das Paar vorgefalteter langer Seiten verbinden, umfasst und die Anschlussplatte durch Falten der rechteckigen Platte entlang einer schrägen Linie (L) ausgebildet wird, die das Paar vorgefalteter langer Seiten verbindet, wobei das Paar langer Seiten der Anschlussplatte jeweils zwei geradlinige Abschnitte der gefalteten Platte umfasst und wobei die Schnittfläche (121c) zu einem der geradlinigen Abschnitte der gefalteten Platte parallel ist.

10. Sekundärbatterie (100) nach Anspruch 9, wobei die rechteckige Platte eine erste Oberfläche (380a), die der Deckelplatte (160) zugewandt ist, und eine zweite Oberfläche (380b), die der ersten Oberfläche gegenüberliegt und der Elektrodenanordnung (110) zugewandt ist, umfasst und die Anschlussplatte derart gefaltet ist, dass ein Abschnitt der ersten Oberfläche die zweite Oberfläche überlagert;
wobei optional die Elektrodenzunge (120) an den überlagernden Abschnitt der ersten Oberfläche angeschweißt ist.

11. Sekundärbatterie (100) nach einem der Ansprüche 1 bis 10, wobei das Gehäuse (130) eine Bodenfläche (131), eine vordere Oberfläche (132) und eine hintere Oberfläche (133), die sich von der Bodenfläche nach oben erstrecken, und ein Paar kurzer Seitenflächen (134, 135), die sich von der Bodenfläche nach oben erstrecken und die vordere Oberfläche und die hintere Oberfläche verbinden, umfasst, wobei Bereiche der kurzen Seitenflächen kleiner sind als Bereiche der vorderen und hinteren Oberfläche und wobei das Gehäuse derart ausgestaltet ist, dass das Paar kurzer Seitenflächen angesichts einer Mittelachse (Y), die sich in einer Mitte des Gehäuses befindet, hin zu der vorderen Oberfläche gebogen ist;
wobei optional ein Winkel der Schnittfläche der Elektrodenzunge zu einem Grad, in dem das Gehäuse gebogen ist, proportional ist.

12. Sekundärbatterie (100) nach einem der Ansprüche 1 bis 11, die ferner eine zweite Elektrodenzunge (122) umfasst, die elektrisch mit der Elektrodenanordnung (110) verbunden ist und an einem Ende der Elektrodenanordnung vorsteht;
wobei optional die zweite Elektrodenzunge entlang einer Längsrichtung des Gehäuses angesichts einer Mittelachse (Y) in einer Mitte des Gehäuses mit der Elektrodenzunge symmetrisch ist.

13. Sekundärbatterie (100) nach Anspruch 12, wobei die Deckelplatte (160) eine erste Oberfläche (160a) und eine zweite Oberfläche (160b), die der ersten Oberfläche gegenüberliegt und der Elektrodenanordnung (110) zugewandt ist, umfasst und die zweite Elektrodenzunge an die zweite Oberfläche angeschweißt ist.

14. Sekundärbatterie (100) nach Anspruch 12 oder 13, wobei die zweite Elektrodenzunge (122) eine erste lange Seite (122a) und eine zweite lange Seite (122b) und eine Schnittfläche (122c), welche die erste lange Seite mit der zweiten langen Seite verbindet, umfasst und ein Winkel (θ1) zwischen der ersten langen Seite und der Schnittfläche größer als 90 Grad ist;
wobei optional die erste lange Seite und die zweite lange Seite im Wesentlichen parallel zu einer Längsrichtung der zweiten Elektrodenzunge sind.

## Revendications

1. Batterie secondaire (100) comprenant :
un ensemble d'électrodes (110) ;
une languette d'électrode (120) électriquement connectée à l'ensemble d'électrodes et faisant saillie à une extrémité de l'ensemble d'électrodes ;
un boîtier (130) logeant l'ensemble d'électrodes ;
une plaque formant capuchon (160) couplée au boîtier ; et
une plaque de borne (180, 280, 380) entre la plaque formant capuchon et l'ensemble d'électrodes et électriquement connectée à la languette d'électrode,
dans laquelle la languette d'électrode comprend un premier (121a, 122a) et un second (121b, 122b) côté long et une surface transversale (121c, 122c) raccordant les premier et second côtés longs,
dans lequel un angle (θ1) entre le premier côté long et la surface transversale est supérieure à 90 degrés,
dans laquelle la plaque de borne comprend une paire de côtés longs (181, 281) et une paire de côtés courts (182, 282) raccordant la paire de côtés longs et plus courte que la paire de côtés longs, et
dans laquelle la surface transversale de la languette d'électrode est formée de manière oblique afin de correspondre à une forme d'une partie de l'un des côtés longs de la plaque de borne.

2. Batterie secondaire (100) selon la revendication 1, dans laquelle les premier (121a, 122a) et second (121b, 122b) côtés longs de la languette d'électrode sont sensiblement parallèles à une direction de longueur de la languette d'électrode.

3. Batterie secondaire (100) selon la revendication 1 ou 2, dans laquelle le premier côté long (121a, 122a) de la languette d'électrode est positionné pour être plus à proximité d'un centre de l'ensemble d'électrodes, et le second côté long de la languette d'électrode est positionné pour être plus à proximité d'un bord externe de l'ensemble d'électrodes.

4. Batterie secondaire (100) selon l'une quelconque des revendications 1 à 3, dans laquelle la surface transversale (121c, 122c) est formée de manière oblique de sorte qu'une longueur de la languette d'électrode (120) augmente du premier côté long (121a, 122a) au second côté long (121b, 122b).

5. Batterie secondaire (100) selon l'une quelconque des revendications 1 à 4, dans laquelle la plaque de borne (180, 280, 380) comprend une première surface (180a, 380a) faisant face à la plaque formant capuchon (160) et une seconde surface (180b, 380b) opposée à la première surface et faisant face à l'ensemble d'électrodes (110), et la languette d'électrode est soudée à la seconde surface.

6. Batterie secondaire (100) selon l'une quelconque des revendications précédentes, dans laquelle les côtés longs (181) de la plaque de borne (180) sont incurvés et dans laquelle la surface transversale est sensiblement parallèle à une partie des côtés longs incurvés de la plaque de borne.

7. Batterie secondaire (100) selon l'une quelconque des revendications précédentes, dans laquelle la paire de côtés longs (281) de la plaque de borne (280) comprennent chacun deux parties de ligne droite (281a, 281b) et dans laquelle la surface transversale (121c) est parallèle à l'une des parties de ligne droite.

8. Batterie secondaire (100) selon la revendication 7, dans laquelle la paire de côtés longs (281) de la plaque de borne (280) comprennent chacun une première partie de ligne droite (281a) perpendiculaire au sens de la longueur de la languette d'électrode (120), et une seconde partie de ligne droite (281b) raccordée à la première partie de ligne droite et s'étendant de manière oblique à partir de la première partie de ligne droite ;
facultativement, dans laquelle la surface transversale (121c) est parallèle à la seconde partie de ligne droite.

9. Batterie secondaire (100) selon l'une quelconque des revendications 1 à 4, dans laquelle la plaque de borne (380) comprend une partie pliée, formée en pliant une plaque rectangulaire ; facultativement dans laquelle la plaque rectangulaire pré-pliée comprend une paire de côtés longs pré-pliés (381) et une paire de côtés courts pré-pliés (382) raccordant la paire de côtés longs pré-pliés et la plaque de borne est formée en pliant la plaque rectangulaire le long d'une ligne oblique (L) raccordant la paire de côtés longs pré-pliés, dans laquelle la paire de côtés longs de la plaque de borne comprennent chacun deux parties de ligne droite de la plaque pliée, et dans laquelle la surface transversale (121c) est parallèle à l'une des parties de ligne droite de la plaque pliée.

10. Batterie secondaire (100) selon la revendication 9, dans laquelle la plaque rectangulaire comprend une première surface (380a) faisant face à la plaque formant capuchon (160) et une seconde surface (380b) opposée à la première surface et faisant face à l'ensemble d'électrode (110), et la plaque de borne est pliée de sorte qu'une partie de la première surface est superposée sur la seconde surface ;
facultativement, dans laquelle la languette d'électrode (120) est soudée sur la partie superposée de la première surface.

11. Batterie secondaire (100) selon l'une quelconque des revendications 1 à 10, dans laquelle le boîtier (130) comprend une surface inférieure (131), une surface avant (132) et une surface arrière (133) s'étendant vers le haut à partir de la surface inférieure, et une paire de surfaces latérales courtes (134, 135) s'étendant vers le haut à partir de la surface inférieure et raccordant la surface avant et la surface arrière, les surfaces des surfaces latérales courtes étant inférieures aux surfaces des surfaces avant et arrière, et dans laquelle le boîtier est configuré de sorte que la paire de surfaces latérales courtes sont pliées vers la surface avant compte tenu d'un axe central (Y) positionné au niveau d'un centre du boîtier ;
facultativement, dans laquelle un angle de la surface transversale de languette d'électrode est proportionnel à un degré auquel le boîtier est plié.

12. Batterie secondaire (100) selon l'une quelconque des revendications 1 à 11, comprenant en outre une seconde languette d'électrode (122) électriquement connectée à l'ensemble d'électrodes (110) et faisant saillie au niveau d'une extrémité de l'ensemble d'électrodes ;
facultativement, dans laquelle la seconde languette d'électrode est symétrique avec la languette d'électrode le long d'une direction de longueur du boîtier compte tenu d'un axe central (Y) au niveau d'un centre du boîtier.

13. Batterie secondaire (100) selon la revendication 12, dans laquelle la plaque formant capuchon (160) comprend une première surface (160a) et une seconde surface (160b) opposée à la première surface et faisant face à l'ensemble d'électrodes (110), et la seconde languette d'électrode est soudée à la seconde surface.

14. Batterie secondaire (100) selon la revendication 12 ou 13, dans laquelle la seconde languette d'électrode (122) comprend un premier côté long (122a) et un second côté long (122b) et une surface transversale (122c) raccordant le premier côté long au second côté long, et un angle (θ1) entre le premier côté long et la surface transversale est supérieur à 90 degrés ;
facultativement, dans laquelle le premier côté long et le second côté long sont sensiblement parallèles à une direction de longueur de la seconde languette d'électrode.
